(19) Europäisches Patentamt
European Patent Office
Office européen des brevets

(11) Veröffentlichungsnummer: **0 012 161**
**B1**

(12) # EUROPÄISCHE PATENTSCHRIFT

(45) Veröffentlichungstag der Patentschrift: **07.04.82**

(51) Int. Cl.³: **A 01 N 57/30** //C07F9/06

(21) Anmeldenummer: **79103438.2**

(22) Anmeldetag: **14.09.79**

(54) **Verwendung von O-(2-Nitro-4-methyl-phenyl)-O-methyl-N-isopropyl-phosphoramido-thioat zur Hemmung des Seitentriebwachstums bei Tabak.**

(30) Priorität: **26.09.78 DE 2841881**

(43) Veröffentlichungstag der Anmeldung:
**25.06.80 Patentblatt 80/13**

(45) Bekanntmachung des Hinweises auf die Patenterteilung:
**07.04.82 Patentblatt 82/14**

(84) Benannte Vertragsstaaten:
**BE CH DE FR GB IT NL**

(56) Entgegenhaltungen:
**FR - A - 2 210 614**
**FR - A - 2 240 688**
**FR - A - 2 240 689**
**NL - A - 7 001 738**
**US - A - 3 989 502**

(73) Patentinhaber: **BAYER AG**
**Zentralbereich Patente, Marken und Lizenzen**
**D-5090 Leverkusen 1, Bayerwerk (DE)**

(72) Erfinder: **Lürssen, Klaus, Dr.**
**August-Kierspel-Strasse 89**
**D-5060 Bergisch-Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 012 161 B1

Verwendung von O-(2-Nitro-4-methyl-phenyl)-O-methyl-N-isopropyl-phosphoramido-thioat zur Hemmung des Seitentriebwachstums bei Tabak

Die vorliegende Erfindung betrifft die Verwendung des bekannten O-(2-Nitro-4-methyl-phenyl)-O-methyl-N-isopropyl-phosphoramidothioats als Wirkstoff zur Hemmung des Seitentriebwachstums bei Tabak.

Es ist bereits bekannt, daß Amido-thiono-phosphorsäureester, darunter auch das O-(2-Nitro-4-methyl-phenyl)-O-methyl-N-isopropyl-phosphoramidothioat, herbizide Eigenschaften (vgl. DE—AS 2 001 771).

Ferner geht aus der FR—A 2 210 614 hervor, daß bestimmte Amido-thiono-phosphorsäureester pflanzenwuchsregulierende Wirksamkeit besitzen. Die offenbarten Stoffe unterscheiden sich jedoch konstitutionell von dem erfindungsgemäß verwendbaren Wirkstoff.

Gemäß US—A 3 989 502 lassen sich zahlreiche O-(2-Nitro-phenyl)-amido-thionophosphorsäureester zur Hemmung des Seitentriebwachstums bei Tabak einsetzen. Die dort aufgeführte allgemeine Formel umfaßt zwar auch die erfindungsgemäß verwendbare Verbindung; letztere wird in der betreffenden Druckschrift aber weder namentlich noch formelmäßig erwähnt.

Weiterhin ist bekannt, daß ein unter der Bezeichnung "Off-Shoot-T"® in Handel befindliches Produkt auf Basis von Fettalkoholen mit 6, 8, 10 und 12 Kohlenstoffatomen zur Regulierung des Pflanzenwachstums, insbesondere zur Unterdrückung des Seitentriebwachstums bei Tabak eingesetzt werden kann (vgl. Farm. Chem. Handbook 1975, Meister Publishing Co., Willoughby, Ohio, 1975, Pesticide Dictionary D 147). Die Wirkung dieses Produktes ist jedoch, besonders bei niedrigen Aufwandmengen, nicht immer befriedigend.

Es wurde nun gefunden, daß da bekannte O-(2-Nitro-4-methyl-phenyl)-O-methyl-N-isopropyl-phosphoramidothioat der Formel

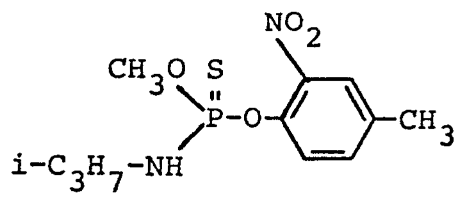

(I)

sehr gut zur Hemmung des Seitentriebwachstums bei Tabak verwendbar ist.

Überraschenderweise zeigt das erfindungsgemäße O-(2-Nitro-4-methyl-phenyl)-O-methyl-N-isopropyl-phosphoramidothioat bei der Hemmung des Seitentriebwachstums bei Tabak eine stärkere Wirksamkeit als das aus dem Stand der Technik bekannte Off-Shoot-T®, welches ein hochaktiver Wirkstoff gleicher Wirkungsart ist. Darüberhinaus übertrifft der erfindungsgemäß verwendbare Wirkstoff überraschenderweise auch das O - (2 - Nitro - 4 - methyl - phenyl) - O - methyl - N - sek. - butylphosphoramidothionat und das O-(2-Nitro-5-methyl-phenyl)-O-methyl-N-sek.-butyl-phosphoramidothioat, welches die konstitutionell ähnlichsten vorbekannten Stoffe gleicher Indikation sind (vgl. US—A 3 989 502 und FR—A 2 210 614), bezüglich ihrer Hemmwirkung auf das Seitentriebwachstum bei Tabak. Die erfindungsgemäße Verwendung des O-(2-Nitro-4-methyl-phenyl)-O-methyl-N-isopropyl-phosphoramidothioats stellt somit eine wertvolle Bereicherung der Technik dar.

Das erfindungsgemäß verwendbare O - (2 - Nitro - 4 - methyl - phenyl) - O - methyl - N - isopropyl-phosphoramidothioat ist bekannt (vgl. DE—AS 2 001 771). Die Verwendung dieses Stoffes zur Hemmung des Seitentriebwachstums bei Tabak ist jedoch neu.

Der erfindungsgemäß verwendbare Wirkstoff läßt sich nach verschiedenen Methoden herstellen. So kann man ihn erhalten, indem man

a) O-Methyl-N-isopropyl-amido-thionophosphorsäureesterhalogenide der Formel

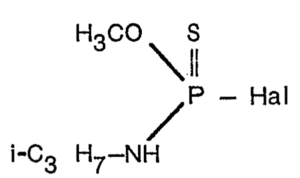

(II)

in welcher
Hal für Chlor oder Brom steht,
mit Phenol-Derivaten der Formel

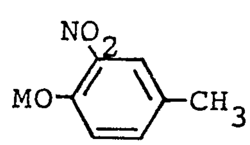

(III)

in welcher
M für Wasserstoff, ein Alkalimetall oder Ammonium steht,
gegebenenfalls in Gegenwart eines Särebindemittels, wie Kaliumcarbonat oder Natriumcarbonat, sowie gegebenenfalls in Gegenwart eines inerten organischen Lösungsmittels, wie z.B. Acetonitril, bei Temperaturen zwischen 30°C und 110°C, vorzugsweise zwischen 40°C und 70°C, umsetzt,

oder indem man

b) O-(2-Nitro-4-methyl-phenyl)-N-isopropyl-amidothiono-phosphorsäureester-halogenide der Formel

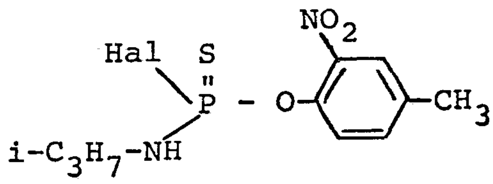
(IV)

in welcher
Hal die oben angegebene Bedeutung hat,
mit Alkalimetallalkoholaten der Formel

$$M'—O—CH_3 \qquad (V)$$

in welcher
M' für Natrium oder Kalium steht,
in Gegenwart eines inerten organischen Lösungsmittels, wie z.B. einem niederen Alkohol, bei Temperaturen zwischen 30°C und 110°C, vorzugsweise zwischen 40°C und 70°C umsetzt,

oder indem man

c) O-Methyl-O-(2-nitro-4-methyl-phenyl)-thiono-phosphorsureester-halogenide der Formel

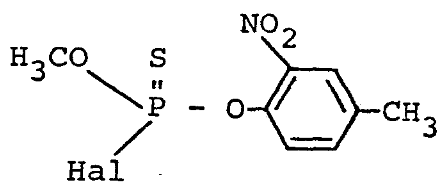
(VI)

in welcher
Hal die oben angegebene Bedeutung hat,
mit Isopropylamin in einem inerten organischen Lösungsmittel, wie Acetonitril, bei Temperaturen zwischen 30°C und 110°C, vorzugsweise zwischen 40°C und 70°C, umsetzt.

Bei dem erfindungsgemäß verwendbaren O-(2-Nitro-4-methyl-phenyl)-O-methyl-N-isopropyl-phosphoramidothioat handelt es sich um einen Feststoff, der zwischen 54°C und 56°C schmilzt.

Der erfindungsgemäß verwendbare Wirkstoff greift in den Metabolismus der Pflanzen ein und kann sehr gut zur Hemmung des Seitentriebwachstums bei Tabak eingesetzt werden. So wird bei Tabakpflanzen nach der Dekapitierung die Ausbildung von Seitentrieben gehemmt und damit das Blattwachstum gefördert.

Der erfindungsgemäß verwendbare Wirkstoff kann in die üblichen Formulierungen übergeführt werden, wie Lösungen, Emulsionen, Suspensionen, Pulver, Schäume, ULV-Kalt- und Warmnebel-Formulierungen.

Diese Formulierungen werden in bekannter Weise hergestellt, z.B. durch Vermischen des Wirkstoffes mit Streckmitteln, also flüssigen Lösungsmitteln, oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Ather, z.B. Alkylarylpolyglykol-äther,

Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Der erfindungsgemäß verwendbare Wirkstoff kann in den Formulierungen in Mischung mit anderen bekannten Wirkstoffen vorliegen, wie Fungizide, Insektizide; Akarizide und Herbizide, sowie in Mischungen mit Düngemitteln und anderen Wachstumsregulatoren.

Der Wirkstoff kann als solcher, in Form seiner Formulierungen oder der daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Begasen usw.

Die Wirkstoffkonzentration kann in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung des Wirkstoffes in einem bevorzugten Zeitraum vorgenommen wird, dessen genaue Abgrenzung sich nach den klimatischen und vegetativen Gegebenheiten richtet.

Die erfindungsgemäße Verwendung des Wirkstoffes geht aus dem nachfolgenden Beispiel hervor.

Beispiel A

*Hemmung des Seitentriebwachstums bei Tabak*

Lösungsmittel: 30 Gewichtsteile Dimethylformamid

Emulgator: 1 Gewichtsteil Polyoxyethylensorbitan-Monolaurat

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Tabakpflanzen werden im Gewächshaus bis zur Entfaltung des 7. Laubblattes angezogen. In diesem Stadium wird die apikale Vegetationsspitze der Pflanzen entfernt und die Pflanzen werden bis zum Abtropfen mit den Wirkstoffzubereitungen besprüht. Nach 3 Wochen werden die Seitentriebe der Pflanzen herausgebrochen und gewogen. Das Gewicht der Seitentriebe der behandelten Pflanzen wird mit dem der Kontrollpflanzen verglichen. 100% Hemmung bedeutet das Fehlen von Seitentrieben und 0% ein Wachstum der Seitentriebe entsprechend dem der Kontrollpflanzen.

Wirkstoffe, Wirkstoffkonzentrationen und Resultate gehen aus der nachfolgenden Tabelle hervor.

TABELLE A

Hemmung des Seitentriebwachstums bei Tabak

| Wirkstoff | Wirkstoff-konzentration in % | Wuchshemmung in % |
|---|---|---|
| — (Kontrolle) | — | = 0 |
| Off-Shoot–T * (bekannt) | 0,2 | 20 |
| 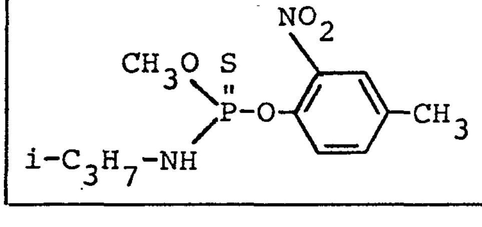 | 0,2<br>0,4<br>0,6 | 92<br>99<br>99 |

*) Off-Shoot-T: Handelsüblicher Wachstumsregulator auf Basis von Fettalkoholen mit 6, 8, 10 und 12 Kohlenstoffatomen.

**Patentanspruch**

Verwendung von O-(2-Nitro-4-methyl-phenyl)-O-methyl-N-isopropyl-phosphoramidothioat der Formel

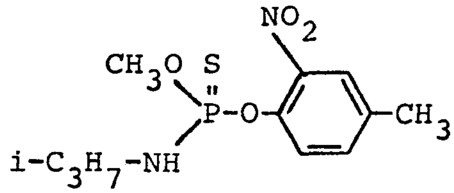

zur Hemmung des Seitentriebwachstums bei Tabak.

**Claim**

The use of O-(2-nitro-4-methylphenyl)-O-methyl-N-isopropylphosphoramidothioate of the formula

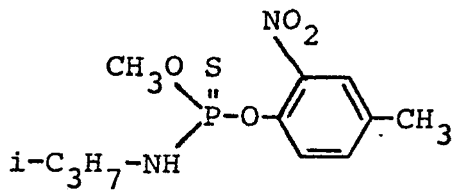

for inhibiting the growth of side shoots of tobacco.

**Revendication**

Utilisation de 1'O-(2-nitro-4-méthyl-phényl)-O-méthyl-N-isopropyl-phosphoramido-thioate de formule:

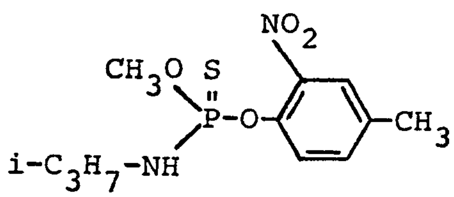

pour inhiber la croissance des pousses latérales dans le tabac.